# EUROPEAN PATENT APPLICATION

(11) **EP 3 995 469 A1**
(43) Date of publication of application: **11.05.2022**
(21) Application number: 20306350.8
(22) Date of filing: 06.11.2020
(51) Int. Cl.: C04B 16/08, C04B 18/20, C04B 28/02, C04B 28/04, C04B 28/14

(54) **CEMENTITIOUS COMPOSITION COMPRISING POWDERED POLYURETHANE**

(71) Applicant: SIKA TECHNOLOGY AG, 6340 Baar (CH)
(72) Inventor: SOUDIER, Jerome, 01150 Vaux En Bugey (FR); LE SAINT, Guillaume, 73230 Thoiry (FR); BEN HARRATH, Alexandre, 38300 Bourgoin Jallieu (FR); AGUERO, Ludovic, 38200 Vienne (FR)
(74) Representative: Sika Patent Attorneys

(57) **Abstract**

The invention relates to a cementitious composition, in particular a dry mortar, comprising
a) 5 - 50 mass parts, preferably 10 - 45 mass parts, more preferably 15 - 29 mass parts of a composite hydraulic binder,
b) 0.1 - 4 mass parts, preferably 0.5 - 3 mass parts, more preferably 1 - 2 mass parts of powdered polyurethane, and
c) optionally 50 - 90 mass parts, preferably 60 - 85 mass parts of aggregate.

The cementitious composition of the present invention is particularly useful as a cementitious tile adhesive, a render or part of a render system.

## Description

### Technical Field

The invention relates to a cementitious composition, in particular a dry mortar, comprising powdered polyurethane, especially recycled polyurethane material. Further objects of the invention are the use of the cementitious composition and a hardened cementitious composition.

### Background of the invention

Cementitious compositions useful as renders, tile adhesives or thermal insulation systems are broadly known. It is generally desirable that such cementitious compositions have a low density in the fresh state, that is a low density when mixed up with water and before hardening. A low density then allows for a particularly efficient application, meaning that less weight is applied for a given geometry. Typically, lightweight fillers such as expanded clays, pumice or glass hollow spheres are used.

Another desirable property of cementitious compositions is a high deformability. For example, cementitious compositions to be used as cementitious tile adhesives have to fulfil special requirements laid down, for example, in international standard EN 12004-1. To reach the performance requirements of deformable and highly deformable cementitious tile adhesives according to this standard, typically, high amounts of soft synthetic latex polymers are formulated in cementitious tile adhesives. Such synthetic latex polymers are costly and have an increased carbon footprint.

There is thus a constant demand to improve the fresh density and deformability of cementitious composition. In view of the recent strive for more sustainable products it would also be desirable to use readily available materials and especially recycled materials for the effect.

Due to their versatility, polyurethanes have shown a rapid growth in volume for decades globally. Among the different forms of polyurethane used, polyurethane foams as well as polyurethane adhesives and sealants have found widespread use. The recycling and reuse of such polyurethanes as an alternative to incineration or deposition in landfills is of increasing importance as volumes continue to grow. Recycled polyurethane materials have been discussed as a possible replacement for aggregates in cementitious compositions (see for example C. Junco et al in Cement & Concrete Composites, 2012, 34, 1174-1179). However, it was shown that especially the strength development can be negatively impaired if aggregate is replaced by polyurethane material.

WO 2013/062986 (Dow Global Technologies) discloses the use of a blend of powdered flexible polyurethane foams with a redispersible polymer powder. The use of such blends in cementitious tile adhesives may lead to an improved tensile adhesion strength after water immersion. However, especially the deformability of the materials described therein is significantly lowered as compared to compositions not comprising the powdered polyurethane.

A cementitious composition would thus be desirable which uses powdered polyurethane, especially recycled powdered polyurethane, and that has an improved deformability.

### Summary of the invention

It is an object of the present invention to provide a cementitious composition comprising powdered polyurethane and having an improved deformability. Such compositions could be especially useful as cementitious tile adhesives or in thermal insulation systems.

The object of the present invention is solved by a cementitious composition according to claim 1. Therein, the cementitious composition is based on a composite hydraulic binder, a powdered polyurethane, and optionally aggregates. The composite hydraulic binder comprises a CEM I, CEM II, CEM III, CEM IV, CEM V or CEM VI according to EN 197-1:2018 and at least one supplementary cementing material or is selected from the group consisting of CEM II, CEM III, CEM IV, CEM V or CEM VI according to EN 197-1:2018.

It is one advantage of a composition of the present invention that the deformability thereof, measured as transverse deformation according to standard EN 12002:2009 after 28d of hardening, is significantly improved as compared to a similar composition but only based on Ordinary Portland Cement as binder.

It is another advantage of the present invention that the fresh density of a cementitious composition can be lowered as compared to the same composition without the use of powdered polyurethane.

Further aspects of the present invention are subject matter of the independent claims. Preferred embodiments are subject matter of the dependant claims.

### Ways of carrying out the invention

In a first aspect the present invention relates to a cementitious composition, especially a dry mortar, characterized in that it comprises
a) 5 - 50 mass parts, preferably 10 - 45 mass parts, more preferably 15 - 29 mass parts of a composite hydraulic binder,
b) 0.1 - 4 mass parts, preferably 0.5 - 3 mass parts, more preferably 1 - 2 mass parts of powdered polyurethane, and
c) optionally 50 - 90 mass parts, preferably 60 - 85 mass parts of aggregate.

A dry mortar within the present context is a cementitious composition with a content of water of not more than 10 wt.-%, preferably not more than 3 wt.-%, especially not more than 1 wt.-%, in each case relative to the total weight of the cementitious composition.

A cementitious composition of the present invention comprises a composite hydraulic binder. According to first embodiments, the composite hydraulic binder comprises a CEM I, CEM II, CEM III, CEM IV, CEM V or CEM VI according to EN 197-1:2018 and at least one supplementary cementing material. According to further embodiments, the composite hydraulic binder is selected from the group consisting of CEM II, CEM III, CEM IV, CEM V or CEM VI according to EN 197-1:2018. However, respective cements according to other standards, for example ASTM standard, Chinese or Indian standard, are likewise suitable.

According to embodiments, the supplementary cementing material is chosen from the group consisting of calcined clays, fly ash, silica fume, tuff, trass, pumice, perlite, diatomaceous earth, rice husk ash, burnt shale, limestone, slag, and mixtures thereof. According to preferred embodiments, the supplementary cementing material is chosen from slag, especially preferred from ground granulated blast furnace slag and/or from basic oxygen furnace slag.

A composite hydraulic binder of the present invention preferably is a mixture comprising Ordinary Portland Cement and at least one supplementary cementing material. Ordinary Portland Cement preferably is a CEM I according to EN 197-1:2018. However, Ordinary Portland Cement according to other standards is also possible.

According to embodiments, a composite hydraulic binder of the present invention consists of a CEM I, CEM II, CEM III, CEM IV, CEM V or CEM VI according to EN 197-1:2018 and at least one supplementary cementing material. According to different embodiments, a composite hydraulic binder consists of CEM II, CEM III, CEM IV, CEM V or CEM VI according to EN 197-1:2018.

It is, however, possible, and in certain cases also preferred, that a composite hydraulic binder of the present invention additionally comprises further minerals. Examples for such further minerals are calcium sulphate, especially in the form of anhydrite, alpha- or beta-hemihydrate or dihydrate, calcium aluminate, high alumina cement, calcium sulphoaluminate cement, and lime, especially in the form of natural hydraulic lime, formulated lime, hydraulic lime, and/or air lime conforming to the standard EN 459-1:2015. The content of such further minerals, if present, may vary in a wide range. The content may, for example, vary between appr. 1 wt.-% to appr. 20 wt.-%, relative to the total dry weight of the cementitious composition. According to embodiments, a composite hydraulic binder of the present invention may thus comprise a CEM I, CEM II, CEM III, CEM IV, CEM V or CEM VI according to EN 197-1:2018, at least one supplementary cementing material, and one or more further minerals selected from the group consisting of calcium sulphate, especially in the form of anhydrite, alpha- or beta-hemihydrate or dihydrate, calcium aluminate, high alumina cement, calcium sulphoaluminate cement, and lime, especially in the form of natural hydraulic lime, formulated lime, hydraulic lime, and/or air lime conforming to the standard EN 459-1:2015. According to different embodiments, a composite hydraulic binder comprises CEM II, CEM III, CEM IV, CEM V or CEM VI according to EN 197-1:2018 and one or more further minerals selected from the group consisting of calcium sulphate, especially in the form of anhydrite, alpha- or beta-hemihydrate or dihydrate, calcium aluminate, high alumina cement, calcium sulphoaluminate cement, and lime, especially in the form of natural hydraulic lime, formulated lime, hydraulic lime, and/or air lime conforming to the standard EN 459-1:2015.

According to preferred embodiments, a weight ratio of any of CEM I, CEM II, CEM III, CEM IV, CEM V or CEM VI to supplementary cementing material in a cementitious composition of the present invention, is in the range of 16:1 - 1:5, preferably 10:1 - 1:2, more preferably 4:1 - 1:1.

A cementitious composition of the present invention comprises a powdered polyurethane. Throughout the present context, the term "powdered polyurethane" refers to a material which, at 23 °C, is in the solid physical state, which is characterized by a particle size distribution, and which contains polymers comprising a plurality of urethane groups. In particular, the powdered polyurethane is a ground polyurethane material obtainable by grinding any flexible or rigid polyurethane material or polyurethane foam into a powder. Preferably, the polyurethane powder of the present invention is obtained from grinding of polyurethanes that are flexible or elastic at 23°C. Still more preferably, the powdered polyurethane of the present invention is obtained in a process of recycling of polyurethanes or polyurethane containing materials. Especially, the powdered polyurethane of the present invention is a recyclate from flexible PU foam insulation board.

A polyurethane (PU), within the present context, is any polymer composed of a chain of organic units joined by urethane (carbamate) links. Urea-bonds may additionally be present. PU polymers are formed by step-growth polymerization or polyaddition reaction, by reacting a monomer with at least two isocyanate functional groups with another monomer with at least two hydroxyl functional groups, preferably in the presence of a catalyst.

The particle size distribution of a powdered polyurethane can be analyzed by sieve analysis as described for example in standard ASTM C136/C136M. The process separates fine particles from coarse particles by passing the material through a number of sieves of different mesh sizes. The material to be analysed is vibrated through a series of sequentially decreasing sieves using a single, or combination of horizontal, vertical or rotational motion. Alternatively, the analysis can be done by air jet sieving, which is particularly useful when particles with sizes < 100 µm are to be analysed. As a result, the percentage of particles passing through a sieve of a given size is obtained. Throughout this document, any lower values of ranges given for a particle size represent D10 values whereas any upper values of the ranges given for a particle size represent D90 values of the respective particle size distribution. In other words, the lower values of such ranges correspond to the particle size where only 10% of all particles have a lower particle size, whereas the upper values of such ranges correspond to the particle size where only 10% of all particles have a larger particle size. The average particle size corresponds in particular to the D50 value (50% of the particles are smaller than the given value, 50% are correspondingly bigger).

The particle size of a powdered polyurethane of the present invention can vary in a wide range. According to embodiments, the particle size of a powdered polyurethane may be in the range of 0.5 µm - 8 mm, preferably 0.8 µm - 5 mm, more preferably 10 µm - 3 mm, especially 50 µm - 1 mm or 1 mm - 3 mm. According to embodiments, the D50 of a powdered polyurethane of the present invention can be between 10 - 1000 µm, preferably between 50 - 500 µm.

It is possible, within the present context, to use a ground, powdered polyurethane from the recycling of polyurethane foams or polyurethane based adhesives or sealants. Polyurethanes foams are available as flexible or rigid foams. Polyurethane adhesives are available as elastic adhesives or sealants. According to one preferred embodiment, the powdered polyurethane of the present invention is obtained from the recycling of polyurethane foams from furniture cushions, automotive seat cushions, carpet cushion, mattress padding, solid-core mattress cores, automotive roof inliners, construction foams, insulation panels, firestops, wheels, etc. According to another preferred embodiment, the powdered polyurethane of the present invention is obtained from the recycling of polyurethane adhesives or sealants. It is, however, likewise preferable to use powdered polyurethane from scrap manufacturing or cutting processes. Especially, the powdered polyurethane of the present invention is a recyclate from flexible PU foam insulation board. The use of recycled polyurethane powder is beneficial for the environment and reduces the cost of cementitious dry mix formulations. It is preferred, that during the recycling process of the polyurethane, the material is first shredded and then ground to a desired particle size. The ground material may be passed through a sifter to separate fine particles from coarse particles. The powdered polyurethane may further be treated with anti-backing agents such as silica or chalk.

Powdered polyurethane of the present invention may comprise typical additives used in the production of polyurethane foams or polyurethane adhesives such as fillers, surfactants, chain extenders, plasticizers, crosslinkers, flame retardants, blowing agents, and/or pigments in conventional amounts.

A cementitious composition of the present invention optionally comprises 50 - 90 mass parts, preferably 60 - 85 mass parts of aggregate.

Aggregates can be any material that is non-reactive in the hydration reaction of cementitious binders. Aggregates can be any aggregate typically used for cementitious compositions. Typical aggregates are for example rock, crushed stone, gravel, slag, sand, especially quartz sand, river sand and/or manufactured sand, recycled concrete, glass, expanded glass, hollow glass beads, glass ceramics, volcanic rock, pumice, perlite, vermiculite, quarry wastes, raw, fired or fused earth or clay, porcelain, electrofused or sintered abrasives, firing support, silica xerogels, and/or fine aggregates, also called fillers, such as ground limestone, ground dolomite, and/or ground aluminum oxide. Aggregates useful for the present invention can have any shape and size typically encountered for such aggregates. An especially preferred aggregate is sand. Sand is a naturally occurring granular material composed of finely divided rock or mineral particles. It is available in various forms and sizes. Examples of suitable sands are quartz sand, limestone sand, river sand or crushed aggregates. Suitable sands are for example described in standards ASTM C778 or EN 196-1. According to embodiments, at least part of the sand used for a cementitious composition of the present invention is quartz sand, river sand, manufactured sand, for example from granite or limestone, or mixtures thereof. According to a preferred embodiment, river sand is used for a cementitious composition of the present invention, since it is chemically inert, strong, available in various sizes and the workability of the composition can be set advantageously. Commonly, sand is supplied in different fractions of particles passing through a sieve with clear openings. According to embodiments, sand with 99% particles having a size of 1 mm or lower, preferably of 0.8 mm or lower, especially of 0.6 mm or lower, in each case as measured according to ASTM C136/ 136M, is used for a cementitious composition of the present invention. It is, however, also possible to use sand with particles having a size of more than 1 mm, for example 2 mm or more, for a cementitious composition of the present invention. The choice of particle size of the sand largely depends on the final use of the cementitious composition. It can be especially preferred to use sands with different particle size distributions to optimize the grading curve. Methods to optimize grading curves are known to the person skilled in the art.

According to embodiments, aggregates can also be one or more of the following (i) - (iv):
(i) biosourced materials, preferably of plant origin, more preferably biosourced materials of plant origin essentially composed of cellulose and/or lignin, especially biosourced materials selected from the group comprising or consisting of hemp, flax, cereal straw, oats, rice, rape, maize, sorghum, flax, miscanthus, rice husk, sugar cane, sunflower, kenaf, coconut, olive stones, bamboo, wood, or mixtures thereof. According to embodiments, biosourced materials of plant origin have a defined form which is preferably selected from fibres, fibrils, dust, powders, shavings, pith, in particular pith of sunflower, maize, rape, and mixtures thereof.
(ii) synthetic non-mineral materials with the exception of polyurethanes or polyurethane-based materials, preferably selected from the group comprising or consisting of thermoplastic, thermosetting plastics, elastomers, rubbers, textiles fibers, plastic materials reinforced with glass or carbon fibres. Synthetic non-mineral materials can be filled or unfilled.
(iii) aggregates of inorganic nature from the deconstruction of civil engineering or building structures, preferably selected from the group comprising or consisting of waste concrete, mortar, bricks, natural stone, asphalt, tiles, tiling, aerated concrete, clinker, scrap metal.
(iv) non-hazardous granular materials usually destined for landfill such as used foundry sands, catalyst supports, Bayer process de-soding treatment supports, clinker aggregates, fillers from the treatment of excavation sludge, sewage sludge, paper waste, paper incineration ashes, household waste incineration ashes.

Most preferably, aggregates are in particulate form. The particle size of aggregates is not particularly limited and may vary within the ranges typically encountered for aggregates used in cementitious compositions, especially in mortars.

According to embodiments, a cementitious composition of the present invention comprises from 50 - 90 mass parts, preferably 60 - 85 mass parts of sand.

In cases where aggregates are present, the volume ratio of powdered polyurethane preferably is in a range of from 2 - 10 Vol-%, more preferably 3 - 8 Vol-%, especially 5 Vol-%, relative to the total combined volume of powdered polyurethane and aggregate.

When aggregates are present, it is preferred that the particle size of the powdered polyurethane is matched to the particle size of the aggregates to ensure a sufficiently high degree of filling. In other words, the sieve curve of such cementitious compositions can be optimized taking into account the particle size of the powdered polyurethane. Methods for the optimization of sieve curves are known to the person skilled in the art.

A cementitious composition may advantageously further comprise materials common in the mortar and/or concrete industry such as for example fillers, plasticizers and/or superplasticizers, air entrainers, defoamers, stabilizers, rheology modifiers, especially thickeners, water reducers, redispersible polymer powders, accelerators, retarders, water resisting agents, strength enhancing additives, fibres, dedusting agents, blowing agents, pigments, corrosion inhibitors, biocides, chromium(VI) reducers. It can be advantageous to combine two or more of the mentioned further materials in one cementitious composition.

A cementitious composition, especially a dry mortar, of the present invention can be made by mixing the constituents, especially the cement, the supplementary cementitious material, the powdered polyurethane, and optionally the aggregate and/or optionally any further materials as defined above, by conventional means. Suitable mixers are for example horizontal single shaft mixers, twin shaft paddle mixers, vertical shaft mixers, ribbon blenders, orbiting mixers, change-can mixers, tumbling vessels, vertical agitated chambers or air agitated operations. Mixing can be continuous or batch-wise.

According to a preferred embodiment, the cementitious composition, especially a dry mortar, of the present invention is a one-component mixture. That means that all the individual constituents are intermixed. One-component compositions are in particular easy to handle and exclude the risk of a mix up or wrong dosing of individual constituents by users.

However, it is in principle possible to provide the cementitious composition, especially a dry mortar, of the present invention as a two-component or even a multi-component composition. Two- or multi-component compositions allow e.g. for adjusting the cementitious composition with regard to specific applications.

In a further aspect, the present invention also relates to a processable composition comprising a cementitious composition, especially a dry mortar, as described above and further comprising water in a water/powder weight ratio between 0.1 - 0.6, preferably 0.2 - 0.5, especially 0.2 - 0.35. The term powder relates to the dry cementitious composition as described above.

Water can be any water available such as distilled water, purified water, tap water, mineral water, spring water, and well water. The use of wastewater is possible only in cases where the composition of such wastewater is known and where none of the impurities contained may impart the functionality of any other component of the composition of the present invention. The use of salt water is not preferred due to its high content of chlorides and the risk of corrosion of steel reinforcement associated therewith.

Typically, a dry cementitious composition is mixed with water only very shortly before its application. This is because upon contact with water, a dry cementitious composition of the present invention will start to harden. It is thus especially preferred to first make a dry cementitious composition, especially a dry mortar, as described above and then mix this dry cementitious composition with water at or near the place of application.

Methods and devices for mixing of the dry cementitious composition with water are not particular limited and are known to the person skilled in the art. Mixing can be continuous, semi-continuous or batch-wise. Continuous mixing offers the advantage of a high material throughput.

A cementitious composition comprising water is also related to as a wet composition within the present context.

According to embodiments a dry cementitious composition as described above is especially part of a dry mortar, a ready mix mortar, or dry concrete composition. According to further embodiments, a dry cementitious composition as described above is especially in the form of a dry mortar, a ready mix mortar, or a dry concrete composition. A dry mortar, ready mix mortar, or dry concrete composition within the present context can be in the form of a mono component material. It is, however, also possible for a dry composition within the present context to be in the form of a multicomponent material, for example a two component or a three component material. According to still further embodiments, a dry composition as described above is prepared on a job site, for example by intermixing at least one of the constituents with other constituents of the dry composition and/or by intermixing two or more components of a multicomponent material.

In yet another aspect, the present invention relates to the use of a cementitious composition as described above as a cementitious tile adhesive, a grouting material, a self-levelling underlayment, a self-levelling overlayment, a render, a repair mortar, a masonry thin join mortar or concrete, a screed, a wall leveller for interior or exterior use, a non-shrink grout, a thin joint mortar, a waterproofing mortar, an anchoring mortar, injection mortar, filling mortar or masonry mortar.

A cementitious tile adhesive is especially according to standard EN 12004-1. A grouting material is especially according to standard EN 13888. A self-levelling underlayment or a self-levelling overlayment is especially according to standard EN 13813. A render is especially according to standard EN 998-1. A repair mortar is especially according to standard EN 1504-3. A masonry mortar or concrete is especially according to standards EN 998-2 and EN 206-1. A screed is especially according to standard EN 13813. A non-shrink grout is especially according to standard EN 1504-6. A thin joint mortar is especially according to standard EN 998-2. A waterproofing mortar is especially according to standard EN 1504-2. An anchoring mortar is especially according to standard EN 1504-6. An injection mortar is especially according to standard EN 1504-5.

According to one preferred embodiment, a cementitious composition of the present invention or a processable cementitious composition as described above, is used as a cementitious tile adhesive. According to another preferred embodiment, a cementitious composition of the present invention or a processable cementitious composition as described above is used as a render or as part of a render system.

Typically, the uses relate to a wet composition, that is a cementitious composition also comprising water in a water/powder ratio between 0.1 - 0.6, preferably 0.2 - 0.5, especially 0.2 - 0.35. The weight ratio of water to powder is adjusted to control the rheology of the wet composition. A higher amount of water will lead to a more flowable wet composition and a lower amount of water to a pasty wet composition. The rheology may be adjusted by the amount of water in a way to yield a wet composition with a rheology ranging from self-levelling to very thick.

It is possible to apply the wet composition of the present invention by any means known to the person skilled in the art. According to one embodiment, the wet composition is applied by trowel, notched trowel, brush or roller. According to another embodiment, the wet composition is applied in a spray application. According to yet another embodiment, the wet composition is poured from a suitable receptable.

Spray applications have the advantage that the application can be done very quickly and in a continuous manner. Suitable equipment for such spray applications is known to the person skilled in the art. According to an especially preferred embodiment, a process of the present invention is run in a continuous manner. Such process is characterized in that water and a dry cementitious composition are mixed continuously and are supplied to a spray head in a continuous manner. This allows for a continuous spray application.

A wet composition of the present invention can be applied in a single layer or in multiple layers. Application in multiple layers has the advantage that a higher overall layer thickness can be achieved.

A primer can be applied to the substrate before application of a wet composition of the present invention. It is also possible to apply a primer in between different layers of a wet composition of the present invention during a multiple layer application.

Upon mixing with water, a cementitious composition of the present invention will start to set and harden. The setting and hardening of a wet composition of the present invention proceeds with time and physical properties, e.g. compressive strength, tensile adhesion strength, etc. are developed thereby. A wet composition of the present invention will harden at various temperatures. It is, however, preferred to harden wet composition of the present invention at temperatures between +1 °C and +50 °C, preferably between +5 °C and +35 °C. It is highly preferred to harden a wet composition of the present invention at a pressure of appr. 1023 mbar. It is also possible to harden and cure a wet composition of the present invention at higher temperatures and also under elevated pressure, for example in an autoclave. Hardening is typically finished after 28 days. However, especially depending on temperature, pressure, and humidity, hardening may already be finished after less than 28 days or last longer than 28 days.

One advantage of a composition of the present invention is that the deformability thereof, measured as transverse deformation according to standard EN 12002:2009 after 28d of hardening, is significantly improved as compared to a similar composition but only based on Ordinary Portland Cement as binder.

It is another advantage of the present invention that by the addition of powdered polyurethane, the fresh density of a cementitious composition can be lowered as compared to the same composition without the use of powdered polyurethane. A lowered density is advantageous as such materials are easier to apply and add less weight to a given support, e.g. a facade.

According to embodiments, a cementitious composition of the present invention has a fresh density as measured according to standard EN 1015-6:2007 which is lower as compared to the fresh density of the same material but comprising aggregate instead of the powdered polyurethane. Lower means that the density is reduced, for example by 1%, preferably 5%, more preferably 10%.

It especially preferably to use polyurethane foam or powdered polyurethane foam for a cementitious composition of the present invention. Such polyurethane foam or powdered polyurethane foam are as described above. If the powdered polyurethane material, e.g. a grinded polyurethane foam, is too fine it will lose air and not lead to a lowered fresh density of the cementitious composition.

The addition of powdered polyurethane according to the present invention has an influence on the water demand of a cementitious composition based on a composite binder as described above. More water is needed to obtain the same workability for a cementitious composition comprising a powdered polyurethane as compared to the same cementitious composition without a powdered polyurethane.

The above advantages are very relevant for cementitious tile adhesives, grouting materials, self-levelling underlayments, self-levelling overlayments, renders, repair mortars, masonry thin join mortars or concretes, screeds, wall levellers for interior or exterior use, non-shrink grouts, thin join mortars, waterproofing mortars, anchoring mortars, injection mortars, filling mortars, or masonry mortars.

In another aspect, the present application therefore also relates to a method for improving the flexibility of a cementitious composition, said method comprising the following steps
a) mixing 5 - 50 mass parts, preferably 10 - 45 mass parts, more preferably 15 - 29 mass parts of a composite hydraulic binder, 0.1 - 4 mass parts, preferably 0.5 - 3 mass parts, more preferably 1 - 2 mass parts of powdered polyurethane, optionally 50 - 90 mass parts, preferably 60 - 85 mass parts of aggregate, optionally further minerals, optionally further additives, and water
b) applying the mixture obtained in step a) on a support or casting the mixture obtained in step a) into a mold, and
c) hardening the mixture to obtain a hardened body.

In yet another aspect, the present invention therefore also relates to a method for lowering the density of a processable cementitious composition, said method comprising the steps of
a) mixing 5 - 50 mass parts, preferably 10 - 45 mass parts, more preferably 15 - 29 mass parts of a composite hydraulic binder, 0.1 - 4 mass parts, preferably 0.5 - 3 mass parts, more preferably 1 - 2 mass parts of powdered polyurethane, optionally 50 - 90 mass parts, preferably 60 - 85 mass parts of aggregate, optionally further minerals, optionally further additives, and
b) mixing the mixture obtained in step a) with water in a water/powder ratio between 0.1 - 0.6, preferably 0.2 - 0.5, especially 0.2 - 0.35 .

In still another aspect the present invention relates to a hardened body obtained by hardening a cementitious composition of the present invention. The present invention especially relates to a hardened cementitious tile adhesive, a hardened grouting material, a hardened self-levelling underlayment, a hardened self-levelling overlayment, a hardened render, a hardened repair mortar, a hardened masonry thin join mortar or concrete, a hardened screed, a hardened wall leveller, a hardened non-shrink grout, a hardened thin joint mortar, a hardened waterproofing mortar, a hardened anchoring mortar, a hardened injection mortar, a hardened filling mortar, or a hardened masonry mortar, whereby any of the cementitious tile adhesive, grouting material, self-levelling underlayment, self-levelling overlayment, render, repair mortar, masonry thin join mortar or concrete, screed, wall leveller, non-shrink grout, thin joint mortar, waterproofing mortar, anchoring mortar, injection mortar, filling mortar, or masonry mortar comprises or consists of a hardened cementitious composition of the present invention.

In a last aspect, the present invention relates to an admixture for a cementitious composition comprising a composite hydraulic binder. Said admixture comprises or essentially consists of powdered polyurethane. The powdered polyurethane is as described above.

According to embodiments, the admixture of the present invention consists of a powdered polyurethane as described above. According to another embodiment, the admixture consists of a powdered polyurethane as described above and an aggregate as described above. In yet another embodiment, the admixture comprises a powdered polyurethane as described above, an aggregate as described above, and optionally further materials common in the mortar and/or concrete industry such as for example fillers, plasticizers and/or superplasticizers, air entrainers, defoamers, stabilizers, rheology modifiers, especially thickeners, water reducers, redispersible polymer powders, accelerators, retarders, water resisting agents, strength enhancing additives, fibres, dedusting agents, blowing agents, pigments, corrosion inhibitors, biocides, chromium(VI) reducers.

The following examples will provide the person skilled in the art with further embodiments of the present invention. They are not meant to limit the invention in any way.

### Examples

The following table 1 shows an overview of raw materials used.

**Table 1: raw materials used**

| | |
|---|---|
| OPC I | Ordinary Portland Cement (CEM I 52.5R) |
| OPC II | Portland Cement (CEM II 42.5R) |
| GGBFS | Ground granulated blast furnace slag (Blaine surface: 4'500 g/cm²; particle size D50 = 11 µm, (CaO+MgO)/SiO₂ = >1.25) |
| BOFS | Basic oxygen furnace slag (primary particle size: 3.5 - 82 µm, D50 = 22 µm; free lime: 8.5 wt.-%) |
| SF | Silica Fume (96% SiO₂, primary particle size: 0.1 - 0.3 µm) |
| Ca(OH)₂ | Hydrated lime acc. to standard EN 459-1.2.3 (> 93% Ca(OH)₂) |
| CaSO₄ | Anhydrous calcium sulfate (median particle size 7 - 10 µm) |
| CaCO₃ | Natural ground calcium carbonate (99.1% CaCO₃, particle size D50 = 17 µm; D98 = 125 µm) |
| Silica Sand | Silica sand (particle size 0.063 - 0.5 mm) |
| Recycled PU I | Ground PU (recyclate from flexible PU foam insulation board; primary |
| | particle size: 10 - 1000 µm; D50 = 250 µm) |
| Recycled PU II | Ground PU (recyclate from flexible PU foam insulation board; primary particle size: 0.8 - 400 µm; D50 = 60 µm) |
| Recycled PU III | Ground PU (recyclate from elastic PU adhesive; primary particle size: 10 - 1000 µm; D50 = 400 µm) |
| Accelerators | 1:1 mixture by weight of calcium formiate and sodium chloride |
| Additives I | 3:1 mixture by weight of redispersible polymer powder (vinyl acetate-ethylene copolymer; MFFT +3°C) and modified cellulose ether |
| Additives II | 22:5:1 mixture by weight of redispersible polymer powder (vinyl acetate-acrylic copolymer; MFFT +7°C), modified cellulose ether, starch ether |

### Test methods:

Unless otherwise indicated, hardening was done at 23°C and 50%r.h.

Fresh density was measured according to standard EN 1015-6:2007.

Initial tensile adhesion strength after hardening time as indicated in tables 2 and 3 as well as tensile adhesion strength after 20 min open time were measured in accordance with EN 1346:2008.

Transverse deformation was measured according to standard EN 12002:2009 after hardening for 28 d.

### Example 1

Example 1 shows the effect of various powdered polyurethane materials in composite binder based cementitious compositions.

The following table 2 shows reference examples Ref-1 to Ref-3 which are not according to the present invention as well as examples 1-1 to 1-3 which are according to the present invention.

The compositions of the respective mixes are given in table 1. All numbers refer to a mass in g of the respective material. OPC, GGBFS, CaCO₃, silica sand, and recycled PU and additives were weighed in the respective amounts and mixed in a mixing bowl on a Hobart mixer for 3 min at 23°C/50% r.h. A visually homogeneous dry mix was obtained. Water was added to this dry mix in an amount to yield a weight ratio of water to powder (w/p ratio) as indicated in table 2. Mixing was then continued for another 1.5 min. Measurements were performed as indicated above.

**Table 2: effect of various recycled PU**

| | Ref-1 | Ref-2 | Ref-3 | 1-1 | 1-2 | 1-3 |
|---|---|---|---|---|---|---|
| OPC II | 35 | 35 | 21 | 21 | 21 | 21 |
| GGBFS | | | 14 | 14 | 14 | 14 |
| CaCO₃ | 30 | 30 | 30 | 30 | 30 | 30 |
| Silica Sand | 33 | 31.5 | 33 | 31.5 | 31.5 | 31.5 |
| Recycled PU I | | 1.5 | | 1.5 | | |
| Recycled PU II | | | | | 1.5 | |
| Recycled PU III | | | | | | 1.5 |
| Additives | 1.9 | 1.9 | 1.9 | 1.9 | 1.9 | 1.9 |
| w/p ratio | 0.26 | 0.28 | 0.26 | 0.29 | 0.28 | 0.26 |
| Fresh density [kg/I] | 1.71 | 1.64 | 1.69 | 1.56 | 1.64 | 1.58 |
| Initial adhesion 7d [MPa] | n.m. | n.m. | 0.87 | 0.68 | 0.60 | 0.75 |
| Adhesion open time 20 min 7d [MPa] | n.m. | n.m. | 0.32 | 0.27 | 0.31 | 0.10 |
| Initial adhesion 28d [MPa] | n.m. | n.m. | 1.13 | 1 | 0.9 | 0.95 |
| Transverse deformation 28 d [mm] | 1.64 | 1.23 | 1.67 | 1.43 | 1.35 | 1.63 |

| | | | | | | |
|---|---|---|---|---|---|---|
| n.m.: not measured | | | | | | |

As can be seen from the above table 2, the addition of powdered PU significantly reduces the fresh density of a given cementitious composition (cf. 1-1 to 1-3 vs Ref-3).

Adhesion strength results shown in table 2 show that it is possible for a cementitious composition of the present invention to reach to values which are high enough for e.g. a cementitious tile adhesive of type C1 according to EN 12004-1:2017.

Furthermore, it can be seen from table 2, that the use of powdered polyurethane in a composition based on a composite binder increases the transverse deformation as compared to the use of powdered polyurethane in a composition based on pure OPC (cf. examples 1-1 to 1-3 vs Ref-2).

### Example 2

Example 2 shows the effect of the addition of powdered polyurethane to different composite binders.

The following table 3 shows reference example Ref-4 which is not according to the present invention as well as examples 2-1 to 2.4 which are according to the present invention.

The compositions of the respective examples are shown in table 3. All numbers refer to a mass in g of the respective material. The individual compositions were prepared in the same way as example 1 above.

**Table 3: effect of powdered PU with various composite binders**

| | Ref-4 | 2-1 | 2-2 | 2-3 | 2-4 |
|---|---|---|---|---|---|
| OPC I | 28 | 17 | 9.2 | 20 | 25.6 |
| GGBFS | | 11 | 8.7 | | |
| BOFS | | | 9.2 | | |
| CaSO₄ | | | 0.5 | | |
| Ca(OH)₂ | | | | 7.6 | |
| Silica Fume | | | | | 2 |
| Silica Sand | 68 | 68 | 68 | 68 | 68 |
| Recycled PU I | 1.4 | 1.4 | 1.4 | 1.4 | 1.4 |
| Accelerators | 1.6 | 1.6 | 1.6 | 1.6 | 1.6 |
| Additives | 1.5 | 1.5 | 1.5 | 1.5 | 1.5 |
| Water/powder ratio | 0.24 | 0.24 | 0.23 | 0.28 | 0.25 |
| Fresh density [kg/I] | 1.52 | 1.46 | 1.44 | 1.54 | 1.53 |
| Initial adhesion 7d [MPa] | 1.27 | 1.01 | 0.97 | 0.93 | 1.25 |
| Adhesion open time 20 min 7d [MPa] | 0.37 | 0.49 | 0.56 | 0.72 | n.m. |
| Initial adhesion 28d [MPa] | 1.14 | 1.03 | 1.07 | 1.09 | 1.11 |
| Transverse deformation 28d [mm] | 2.38 | 2.56 | 3.12 | 2.63 | 2.56 |

| | | | | | |
|---|---|---|---|---|---|
| n.m.: not measured | | | | | |

As can be seen from the above table 3, adhesion strength values of inventive formulations 2-1 to 2-4 are high enough to comply with requirements for cementitious tile adhesives of type C1 according to EN 12004-1:2017.

Furthermore, it can be seen from table 3, that the use of powdered polyurethane in compositions based on composite binders strongly increases the transverse deformation as compared to the use of powdered polyurethane in a composition based on pure OPC (cf. examples 2-1 to 2-4 vs Ref-4).

## Claims

1. A cementitious composition, especially a dry mortar, **characterized in that** it comprises
a) 5 - 50 mass parts, preferably 10 - 45 mass parts, more preferably 15 - 29 mass parts of a composite hydraulic binder,
b) 0.1 - 4 mass parts, preferably 0.5 - 3 mass parts, more preferably 1 - 2 mass parts of powdered polyurethane, and
c) optionally 50 - 90 mass parts, preferably 60 - 85 mass parts of aggregate.

2. A cementitious composition according to claim 1, **characterized in that** the composite hydraulic binder comprises a CEM I, CEM II, CEM III, CEM IV, CEM V or CEM VI according to EN 197-1:2018 and at least one supplementary cementing material.

3. A cementitious composition according to claim 1, **characterized in that** the composite hydraulic binder is selected from the group consisting of CEM II, CEM III, CEM IV, CEM V or CEM VI according to EN 197-1:2018.

4. A cementitious composition according to claim 2, **characterized in that** the supplementary cementing material is chosen from the group consisting of calcined clays, fly ash, silica fume, tuff, trass, pumice, perlite, diatomaceous earth, rice husk ash, burnt shale, limestone, slag, and mixtures thereof.

5. A cementitious composition according to claim 2, **characterized in that** the supplementary cementing material is chosen from slag, especially preferred from ground granulated blast furnace slag and/or from basic oxygen furnace slag.

6. A cementitious composition according to at least one of claims 2, 4 and 5, **characterized in that** the weight ratio of any of CEM I, CEM II, CEM III, CEM IV, CEM V or CEM VI to supplementary cementing material is in the range of 16:1 - 1:5, preferably 10:1 - 1:2, more preferably 4:1 - 1:1.

7. A cementitious composition according to at least one of the preceding claims, **characterized in that** it further comprises
d) one or more further minerals selected from the group consisting of calcium sulphate, especially in the form of anhydrite, alpha- or beta-hemihydrate or dihydrate, calcium aluminate, high alumina cement, calcium sulphoaluminate cement, and lime, especially in the form of natural hydraulic lime, formulated lime, hydraulic lime, and/or air lime conforming to the standard EN 459-1:2015.

8. A cementitious composition according to at least one of the preceding claims, **characterized in that** the powdered polyurethane material has a particle size in the range of 0.5 µm - 8 mm, preferably 0.8 µm - 5 mm, more preferably 10 µm - 3 mm, especially 50 µm - 1 mm or 1 mm - 3 mm.

9. A cementitious composition according to at least one of the preceding claims, **characterized in that** the volume ratio of powdered polyurethane is in a range of from 2 - 10 Vol-%, more preferably 3 - 8 Vol-%, especially 5 Vol-%, relative to the total combined volume of powdered polyurethane and aggregate.

10. A processable cementitious composition obtained by mixing a cementitious composition, especially a dry mortar, according to at least one of claims 1 - 10 with water in a water/powder weight ratio between 0.1 - 0.6, preferably 0.2 - 0.5, especially 0.2 - 0.35.

11. A hardened body obtained by hardening a processable cementitious composition of claim 10.

12. Method for improving the flexibility of a cementitious composition, said method comprising the following steps
a) mixing 5 - 50 mass parts, preferably 10 - 45 mass parts, more preferably 15 - 29 mass parts of a composite hydraulic binder, 0.1 - 4 mass parts, preferably 0.5 - 3 mass parts, more preferably 1 - 2 mass parts of powdered polyurethane, optionally 50 - 90 mass parts, preferably 60 - 85 mass parts of aggregate, optionally further minerals, optionally further additives, and water
b) applying the mixture obtained in step a) on a support or casting the mixture obtained in step a) into a mold, and
c) hardening the mixture to obtain a hardened body.

13. Method for lowering the density of a processable cementitious composition, said method comprising the following steps
a) mixing 5 - 50 mass parts, preferably 10 - 45 mass parts, more preferably 15 - 29 mass parts of a composite hydraulic binder, 0.1 - 4 mass parts, preferably 0.5 - 3 mass parts, more preferably 1 - 2 mass parts of powdered polyurethane, optionally 50 - 90 mass parts, preferably 60 - 85 mass parts of aggregate, optionally further minerals, optionally further additives, and
b) mixing the mixture obtained in step a) with water in a water/powder ratio between 0.1 - 0.6, preferably 0.2 - 0.5, especially 0.2 - 0.35.

14. Use of a cementitious composition according to claim 1 - 9 or of a processable cementitious composition according to claim 10 as a render or as part of a render system.

15. Use of a cementitious composition according to claim 1 - 9 or of a processable cementitious composition according to claim 10 as a tile adhesive.

16. An admixture for a cementitious composition comprising a composite hydraulic binder, said admixture comprising or essentially consisting of powdered polyurethane.
